# EUROPEAN PATENT SPECIFICATION

(11) **EP 3 745 419 B1**
(45) Date of publication and mention of the grant of the patent: **23.08.2023**
(21) Application number: 18902048.0
(22) Date of filing: 30.07.2018
(51) Int. Cl.: G21C 3/04, G21C 21/02

(54) **NUCLEAR FUEL PELLET HAVING EXCELLENT COMPRESSION RESISTANCE AND REDUCED SURFACE DEFECT**
KERNBRENNSTOFFPELLET MIT AUSGEZEICHNETER DRUCKFESTIGKEIT UND REDUZIERTEM OBERFLÄCHENDEFEKT
PASTILLE DE COMBUSTIBLE NUCLÉAIRE AYANT UNE EXCELLENTE RÉSISTANCE À LA COMPRESSION ET UN DÉFAUT DE SURFACE RÉDUIT

(30) Priority: 24.01.2018 KR 20180008764
(43) Date of publication of application: 02.12.2020
(73) Proprietor: Kepco Nuclear Fuel Co., Ltd, Daejeon 34057 (KR)
(72) Inventor: CHOI, Min Young, Daejeon 35220 (KR); NA, Yeon-soo, Daejeon 34071 (KR); LIM, Kwang-young, Seoul 03620 (KR); JUNG, Tae Sik, Sejong-si 30150 (KR); LEE, Seung-jae, Daejeon 34155 (KR); MOK, Yong Kyoon, Daejeon 34071 (KR); YOO, Jong Sung, Daejeon 35245 (KR)
(74) Representative: Peterreins Schley
(86) International application number: PCT/KR2018/008637
(87) International publication number: WO 2019/146858

(56) References cited:
- WO-A1-02/45096
- WO-A1-2010/037748
- JP-A- 2000 206 282
- KR-A- 20000 019 009
- KR-A- 20100 079 423
- KR-A- 20110 070 984
- US-B2- 9 053 830

## Description

### Technical Field

The present invention relates to a fuel pellet and, in particular, to a fuel pellet used in nuclear power plants and having a shape providing excellent compression resistance and excellent surface defect reduction performance.

### Background Art

Nuclear fuel used in a nuclear power plant is generally composed of stacked fuel pellets inside a cladding. At this time, the fuel pellet is mainly fabricated by using UO₂ powder. In order to improve the economic efficiency of the nuclear power plant, a high-burnup and long-term operation is considered, and accordingly, the operating environment of the nuclear power plant has become harsher, and the necessity of developing a high-performance nuclear fuel has emerged.

In particular, a missing pellet surface occurs due to various external impacts, contacts, and the like during a manufacturing process and movement of the fabricated fuel pellet and excessive stress is concentrated on a site of the missing pellet surface, resulting in cracking of the fuel pellet. Conventionally, the cracking expands to pellet-cladding mechanical interaction (PCMI) damage, fuel pellet fracture due to fission gas agglomeration at the site of the surface defect of the fuel pellet, and the like. This has emerged as an important problem in an increasingly harsh nuclear operating environment.

As such, many studies have been conducted to improve the performance of reducing missing pellet surface in the nuclear fuel of the nuclear power plant, and in particular, many studies have been conducted on the shape of a fuel pellet that can secure the integrity of nuclear fuel in a high-burnup and long-term operation. The fuel pellet is composed of: a dish at a center part; a chamfer at an end part; and a land part connecting the dish and the chamfer therethrough. In particular, the chamfer, which is the end of the fuel pellet, serves to minimize the breakage of the fuel pellet due to contact of the end portion, by being formed at a predetermined angle. However, currently, as many missing pellet surface are still generated in commercial fuel pellets, studies have been most greatly conducted on changing a chamfer angle of the fuel pellet.

WO2010/037748 discloses a nuclear fuel pellet of cylindrical shape and a dish on the top and bottom surface thereof.

However, since it is difficult to improve the performance of reducing missing pellet surface only by changing the chamfer angle, and it is also difficult to compensate, in consideration of power plant efficiency, for the loss of the fuel pellet according to the change in the angle, changes in dishes, lands, and the like are also being studied.

Therefore, the present applicant is to provide a fuel pellet that exhibits superior missing pellet surface reduction performance through a change in land width along with the chamfer angle while conducting research for the performance of reducing missing pellet surface.

### Documents of Related Art

Korean Patent No. KR 10-0982664 (Registered on September 10, 2010)

### Disclosure

### Technical Problem

Accordingly, the present invention is proposed to solve the problems as described above and has an objective to provide a fuel pellet having improved missing pellet surface reduction performance that can be used in a core of a nuclear power plant by providing a double chamfer.

### Technical Solution

In order to achieve the above objective, a double chamfer is provided, and a shape of a fuel pellet according to the present invention is as follows.

The double chamfer makes a new chamfer having a small angle move to the center of a fuel pellet and flatten due to the densification of the fuel pellet while a green pellet is being sintered, thus reducing the risk of missing pellet surface. At this time, a land portion having a slope of a zero-degree angle should be essentially present between a dish and a primary chamfer. In conventional double chamfer-related patents, the land portion does not present, and the chamfer directly leads to the dish. At this time, the stress is collected at a portion where the chamfer starts in the dish, and thus there is no significant effect on reducing missing pellet surface probability. In addition, by adding the land portion, the amount of loss of the fuel pellet is reduced to increase power plant efficiency.

Therefore, in the present invention, the land portion is placed between the chamfer and the dish so that the reducing performance for missing pellet surface is improved through a change in the land portion width along with a change in the chamfer angle.

### Advantageous Effects

As described above, the fuel pellet according to the present invention is excellent in reducing performance of missing pellet surface by controlling the chamfer angle and the land portion width and has a high compressive strength that can be withstood inside the cladding, thereby improving the integrity of the fuel pellet. Accordingly, there is an effect that the fuel pellet can be usefully used even in a high-burnup and long-term operating environment of a nuclear power plant.

### Description of Drawings

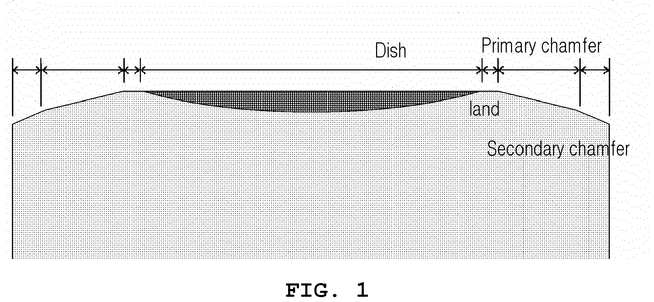

FIG. 1 is a front sectional view of an upper portion of a fuel pellet according to the present invention.

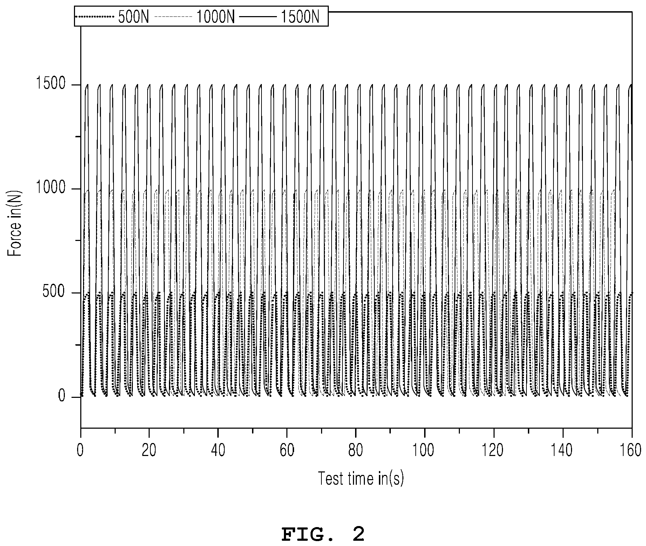

FIG. 2 is a schematic view of a compression fatigue test in the present invention.

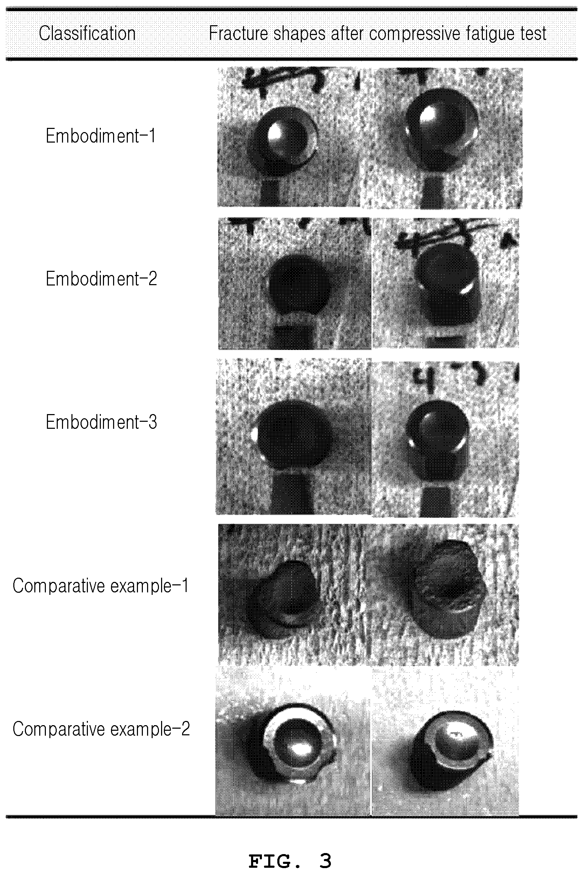

FIG. 3 shows sectional views of the fuel pellet after the compression fatigue test in the present invention.

### Best Mode

Specific structures or functional descriptions presented in embodiments of the present invention are exemplified for a purpose of describing the embodiments according to a concept of the present invention, and the embodiments according to the concept of the present invention may be implemented in various forms. In addition, the present invention should not be construed as being limited to the embodiments described herein but should be understood to include all modifications, equivalents, or substitutes included in the spirit and scope thereof.

Hereinafter, the present invention will be described in detail with reference to the accompanying drawings.

The fuel pellet according to the present invention is configured to include a dish, a land, and a chamfer, and has the dish the same as present in a conventional fuel pellet and improves missing pellet surface resistance by changing a double chamfer and land width.

In addition, the fuel pellet has the double chamfer and conserves the amount of uranium loss of the fuel pellet and improves resistance to missing pellet surface.

In addition, the fuel pellet has a primary chamfer and a secondary chamfer, as a double chamfer, thereby improving the missing pellet surface resistance by resolving a stress concentration phenomenon of a portion leading from a land portion of the conventional fuel pellet to the chamfer.

In addition, in the fuel pellet, the primary chamfer of the double chamfer has a gentler slope than the secondary chamfer.

In addition, the primary chamfer of the double chamfer of the fuel pellet has an angle of a one-degree angle to a four-degree angle and a width of 0.3 to 1.5 mm.

In addition, the secondary chamfer of the double chamfer of the fuel pellet has an angle of a 12-degree angle to a 25-degree angle and a width of 0.13 to 0.18 mm.

In addition, the fuel pellet has the land portion between the double chamfer and the dish, thereby preventing abnormal stacking of the fuel pellets and reducing the concentration of the stress between the primary chamfer and the dish to improve resistance to defects, wherein the land has a width of 0.3 to 1.5 mm.

The green pellet of the present invention shrinks in the width and angle while becoming the fuel pellet after sintering, but since the variation thereof is not large, the ranges of chamfer angle and the land portion width of the green pellet and the fuel pellet are considered to be the same.

In addition, when the angle of the primary chamfer of the fuel pellet having the double chamfer is lower than a 1-degree angle, the secondary chamfer becomes completely flat after sintering, so there is no effect of improving missing pellet surface resistance. In addition, when the angle of the primary chamfer of the fuel pellet having the double chamfer is greater than a 4-degree angle, a portion between the primary chamfer and the secondary chamfer acts as an edge, so it is easy to cause damage at a site of the portion.

In addition, when there is no land portion of the fuel pellet having the double chamfer, since damage occurs between the primary chamfer and the dish, the land portion of a predetermined width is necessarily included.

The fuel pellet according to the present invention is prepared by the following method.

Step 1 is to add a lubricant to the UO₂-based powder and mix the lubricant and the UO₂-based powder, and then to crush, dry, and sieve a mixture to make a mixed powder.

Step 2 is a process of providing a green pellet at a constant pressure by putting the mixed powder prepared by the preparing method of step 1 into a mold die. At this time, the pressure is 2,500 to 3,000 kgf.

In addition, in the case of the fuel pellet having the double chamfer, the compaction density is low when the pressure is less than 2,500 kgf, and a defect may occur at the end portion of the green pellet when the pressure is more than 3,000 kgf.

Step 3 is a process of preparing the fuel pellet having improved missing pellet surface resistance by maintaining the green pellet, obtained by the preparing method of step 2, in a gas atmosphere of reducing hydrogen gas at a temperature of 1600 to 1850°C for two to 4 hours.

In addition, in the case of the fuel pellet having the double chamfer, when the sintering time is less than 2 hours, the densification by sintering is not completely achieved, so that the primary chamfer is difficult to flatten, and when the sintering time is greater than 4 hours, the sintering is excessive, whereby the primary chamfer is completely flattened, thereby being unable to properly play its original role.

Hereinafter, the present invention consisting of the steps described above will be described in more detail by taking various embodiments as examples.

Specific details of the fuel pellet according to the present invention are summarized in Table 1 below.

**[Table 1]**

| Classification | Degree angle (°) | | Volume (mm³) | | | | Uranium loss rate (%) |
|---|---|---|---|---|---|---|---|
| | Primary chamfer | Secondary chamfer | | Primary chamfer height | Secondary chamfer height | Land width | |
| Embodiment-1 | 2 | 13 | 511.7 | 0.13 | 0.38 | 0.35 | 8.57 |
| Embodiment-2 | 4 | 13 | 511.3 | 0.17 | 0.38 | 0.50 | 9.17 |
| Embodiment-3 | 2 | 18 | 510.6 | 0.13 | 0.66 | 0.75 | 11.17 |
| Embodiment-4 | 4 | 18 | 509.7 | 0.17 | 0.66 | 1.00 | 11.77 |
| Embodiment-5 | 2 | 23 | 509.8 | 0.13 | 0.94 | 1.25 | 12.07 |
| Embodiment-6 | 4 | 23 | 508.9 | 0.17 | 0.94 | 1.50 | 12.47 |
| Comparative example-1 | | - | | | - | | |
| Comparative example-2 | 2 | 13 | 510.9 | 0.13 | 0.38 | - | 12.33 |

### <Comparative example-1>

As a comparative example 1, a commercially available fuel pellet used in a nuclear power plant was used. The commercial fuel pellet has a single chamfer, and no secondary chamfer is present.

### <Comparative example-2>

As a comparative example 2, a fuel pellet having the double chamfer without the land portion was prepared and used.

### <Test example 1> Performance test of missing pellet surface shape for the present invention

In order to investigate the reduction performance of missing pellet surface resistance fuel pellet for present invention, according to the present invention, a low cycle compression fatigue test was performed by simulating stacking of the fuel pellets.

After the fuel pellets of embodiments 1 to 6 were prepared by the above preparing process, the situation in which the fuel pellets were stacked in the cladding was simulated, and the tests were each performed 50 cycles by increasing the pressure to 500 to 1500 N (Newton). The stacking of the fuel pellets was performed in two cases, a normal state and an abnormal state.

After the low cycle compression fatigue test, an amount of the weight loss of the fuel pellets in the case of fracture was measured and shown in Table 2 except for the fuel pellets in which no fracture occurred.

**[Table 2]**

| | Before test | After test | Amount of weight change |
|---|---|---|---|
| Embodiment-1 | 5.8679 | 5.7521 | 0.1158 |
| Embodiment-2 | 5.8075 | 5.4637 | 0.3438 |
| Embodiment-3 | 5.8101 | 5.8101 | 0.0000 |
| Embodiment-4 | 5.8524 | 5.6533 | 0.1991 |
| Embodiment-5 | 5.8309 | 5.6084 | 0.2225 |
| Embodiment-6 | 5.8428 | 5.7069 | 0.1359 |
| Comparative example-1 | 5.4564 | 4.9744 | 0.4820 |
| Comparative example-2 | 5.7866 | 5.0537 | 0.7329 |

As shown in Table 2, the fuel pellets of embodiments 1 to 6 prepared according to the present invention exhibited a lower weight reduction amount due to a smaller amount of fractured fuel pellets than the commercially available fuel pellets shown in comparative example 1. In addition, the weight reduction amount of the fuel pellets of embodiments 1 to 6 prepared according to the present invention exhibited lower than that of the fuel pellet having the double chamfer without the land portion shown in comparative example 2. In addition, when the cross-sections of the fuel pellets after fractured are investigated, it may be seen that the fuel pellets having the double chamfers are less damaged. Therefore, it may be seen that the missing pellet surface resistance was improved in the fuel pellets of embodiments 1 to 6 in which the fuel pellets inside the cladding were simulated.

### <Test Example 2> Compressive strength test

In order to find out maximum compressive strength applied to the fuel pellet according to the present invention, a compression test was performed. The compression test was performed at a rate of 1 mm/min until fracture of the fuel pellet after holding the fuel pellet for about 10 seconds at 50 N of preload. As shown in Table 3, the maximum compressive strength is higher in the fuel pellets having the double chamfers of embodiments 1 to 6 than in the commercially available fuel pellets presented in comparative example 1, indicating that the compressive strength characteristics were improved.

**[Table 3]**

| | Maximum compressive strength (MPa) |
|---|---|
| Embodiment-1 | 105.0 |
| Embodiment-2 | 115.8 |
| Embodiment-3 | 123.8 |
| Embodiment-4 | 123.1 |
| Embodiment-5 | 119.7 |
| Embodiment-6 | 120.2 |
| Comparative example-1 | 83.0 |
| Comparative example-2 | 76.6 |

The double chamfer makes the new chamfer having a small angle move to the center of the fuel pellet and flatten due to the densification of the fuel pellet while a green pellet is being sintered, reducing the risk of missing pellet surface. At this time, a land portion having a slope of a zero-degree angle should be essentially present between the dish and the primary chamfer. In conventional double chamfer-related patents, the land portion does not present, and the chamfer directly leads to the dish. At this time, the stress is collected at a portion where the chamfer starts from the dish, and thus there is no significant effect on reducing the missing pellet surface. In addition, by adding the land portion, there is an effect that the amount of loss of the fuel pellet is reduced to increase power plant efficiency.

Therefore, the present invention aims such that the land portion is placed between the chamfer and the dish, whereby the reduction performance of missing pellet surface-is enhanced through a change in the land width and chamfer angle.

## Claims

1. A nuclear fuel pellet having excellent compression resistance and a reduced missing pellet surface, pellet being a cylindrical shape and comprising, on each of a top surface and a bottom surface thereof:
a dish configured as a spherical groove shape having a predetermined curved surface at a center;
a land configured as a horizontal annular shape along a rim of the dish; and
a chamfer configured as a shape in which a corner is chamfered at a predetermined angle along a rim of the land, wherein the chamfer comprises:
a primary chamfer adjacent to the rim of the land; and
a secondary chamfer configured as a shape additionally chamfered along a rim of the primary chamfer.

2. The pellet of claim 1, wherein an angle made by the primary chamfer and a horizontal plane is smaller than an angle made by the secondary chamfer and the horizontal plane.

3. The pellet of claim 2, wherein the angle made by the primary chamfer and the horizontal plane is a one-degree angle to a 4-degree angle.

4. The pellet of claim 2, wherein the angle made by the secondary chamfer and the horizontal plane is a 14-degree angle to a 25-degree angle.

5. The pellet of claim 1, wherein width of the land is 0.3 to 1.5 mm.

6. A preparing method of a nuclear fuel pellet having excellent compression resistance and a reduced missing pellet surface, the method comprising:
preparing a mixed powder by mixing UO₂-based powder and lubricant powder;
preparing a green pellet by compressing and molding the mixed powder to 2,500 to 3,000 kgf; and
sintering the green pellet with a reducing gas atmosphere at 1600 to 1850°C for 2-4 hours,
wherein in the preparing the green pellet by compressing and molding the mixed powder, to prepare the green pellet into a fuel pellet having a cylindrical shape, each of the top surface and the bottom surface of the fuel pellet is prepared to comprise:
a dish configured as a spherical groove shape having a predetermined curved surface in a center;
a land configured as a horizontal annular shape along an edge of the dish; and
a chamfer configured as a shape in which a corner of the surface is chamfered at a predetermined angle along a rim of the land, wherein the chamfer comprises:
a primary chamfer adjacent to the rim of the land; and
a secondary chamfer configured as a shape in which the corner of the surface is additionally chamfered along the rim of the primary chamfer.

7. The method of claim 6, wherein, in the preparing the green pellet by compressing and molding the mixed powder, an angle made by the primary chamfer and a horizontal plane is configured to be smaller than an angle made by the secondary chamfer and the horizontal plane.

8. The method of claim 7, wherein an angle made by the primary chamfer and the horizontal plane is a 1-degree angle to a 4-degree angle.

9. The method of claim 7, wherein an angle made by the secondary chamfer and the horizontal plane is a 14-degree angle to a 25-degree angle.

10. The method of claim 6, wherein width of the land is 0.3 to 1.5 mm.

## Patentansprüche

1. Kernbrennstoffpellet mit ausgezeichneter Druckfestigkeit und reduziertem Oberflächendefekt, wobei das Pellet eine zylindrische Form aufweist und auf jeder einer oberen Oberfläche und einer unteren Oberfläche davon umfasst:
eine Schale, konfiguriert als sphärische Rillenform, in einer Mitte eine vorbestimmte gekrümmte Oberfläche aufweisend;
einen Steg, konfiguriert als horizontale Ringform entlang eines Randes der Schale; und
eine Schräge, konfiguriert als eine Form, bei der eine Ecke in einem vorbestimmten Winkel entlang eines Randes des Stegs abgeschrägt ist, wobei die Schräge umfasst:
eine primäre Schräge neben dem Rand des Stegs; und eine sekundäre Schräge, konfiguriert als Form, die zusätzlich entlang eines Randes der primären Schräge abgeschrägt ist.

2. Pellet nach Anspruch 1, wobei ein durch die primäre Schräge und eine horizontale Ebene ausgebildeter Winkel kleiner ist als ein durch die sekundäre Schräge und die horizontale Ebene ausgebildeter Winkel.

3. Pellet nach Anspruch 2, wobei der durch die primäre Schräge und die horizontale Ebene ausgebildete Winkel ein Winkel von 1° bis zu 4° ist.

4. Pellet nach Anspruch 2, wobei der durch die sekundäre Schräge und die horizontale Ebene ausgebildete Winkel ein Winkel von 14° bis zu 25° ist.

5. Pellet nach Anspruch 1, wobei die Breite des Stegs 0,3 bis 1,5 mm beträgt.

6. Herstellungsverfahren für ein Kernbrennstoffpellet mit ausgezeichneter Druckfestigkeit und reduziertem Oberflächendefekt, das Verfahren umfassend:
Herstellen eines gemischten Pulvers durch Mischen von UO2-basiertem Pulver und Gleitmittelpulver;
Herstellen eines grünen Pellets durch Komprimieren und Formen des gemischten Pulvers auf 2.500 bis 3.000 kgf; und
Sintern des grünen Pellets unter einer reduzierenden Gasatmosphäre 2-4 Stunden lang bei 1600 bis 1850 °C,
wobei beim Herstellen des grünen Pellets durch Komprimieren und Formen des gemischten Pulvers zum Herstellen des grünen Pellets in ein Brennstoffpellet mit einer zylindrischen Form jeweils die obere Oberfläche und die untere Oberfläche des Brennstoffpellets so hergestellt werden, dass sie Folgendes umfassen:
eine Schale, konfiguriert als sphärische Rillenform, in einer Mitte eine vorbestimmte gekrümmte Oberfläche aufweisend;
einen Steg, konfiguriert als horizontale Ringform entlang einer Kante der Schale; und
eine Schräge, konfiguriert als eine Form, bei der eine Ecke der Oberfläche in einem vorbestimmten Winkel entlang eines Randes des Stegs abgeschrägt ist, wobei die Schräge umfasst:
eine primäre Schräge neben dem Rand des Stegs; und
eine sekundäre Schräge, konfiguriert als Form, bei der die Ecke der Oberfläche zusätzlich entlang des Randes der primären Schräge abgeschrägt ist.

7. Verfahren nach Anspruch 6, wobei beim Herstellen des grünen Pellets durch Komprimieren und Formen des gemischten Pulvers ein durch die primäre Schräge und eine horizontale Ebene ausgebildeter Winkel dazu konfiguriert ist, kleiner zu sein als ein durch die sekundäre Schräge und die horizontale Ebene ausgebildeter Winkel.

8. Verfahren nach Anspruch 7, wobei ein durch die primäre Schräge und die horizontale Ebene ausgebildete Winkel ein Winkel von 1° bis zu 4° ist.

9. Verfahren nach Anspruch 7, wobei ein durch die sekundäre Schräge und die horizontale Ebene ausgebildete Winkel ein Winkel von 14° bis zu 25° ist.

10. Verfahren nach Anspruch 6, wobei die Breite des Stegs 0,3 bis 1,5 mm beträgt.

## Revendications

1. Pastille de combustible nucléaire ayant une excellente résistance à la compression et une surface manquante de pastille réduite, la pastille étant une forme cylindrique et comprenant, à la fois sur une surface supérieure et une surface inférieure de celle-ci :
une cuvette configurée comme une forme de rainure sphérique ayant une surface incurvée prédéterminée à un centre ;
un méplat configuré comme une forme annulaire horizontale le long d'un bord de la cuvette ; et
un chanfrein configuré comme une forme dans laquelle un coin est chanfreiné à un angle prédéterminé le long d'un bord du méplat, le chanfrein comprenant :
un chanfrein principal adjacent au bord du méplat ; et
un chanfrein secondaire configuré comme une forme également chanfreinée le long d'un bord du chanfrein principal.

2. Pastille de la revendication 1, dans laquelle un angle fait par le chanfrein principal et un plan horizontal est inférieur à un angle fait par le chanfrein secondaire et le plan horizontal.

3. Pastille la revendication 2, dans laquelle l'angle fait par le chanfrein principal et le plan horizontal est un angle d'un degré à un angle de 4 degrés.

4. Pastille la revendication 2, dans laquelle l'angle fait par le chanfrein secondaire et le plan horizontal est un angle de 14 degrés à un angle de 25 degrés.

5. Pastille de la revendication 1, dans laquelle une largeur du méplat est de 0,3 à 1,5 mm.

6. Procédé de préparation d'une pastille de combustible nucléaire ayant une excellente résistance à la compression et une surface manquante de pastille réduite, le procédé comprenant :
la préparation d'une poudre mixte par mélange d'une poudre à base d'UO2 et d'une poudre de lubrifiant ;
la préparation d'une pastille crue par compression et moulage de la poudre mixte à 2500 à 3000 kgf ; et
le frittage de la pastille crue avec une atmosphère gazeuse réductrice à 1600 à 1850 °C pendant 2-4 heures,
dans lequel, dans la préparation de la pastille crue par compression et moulage de la poudre mixte, pour préparer la pastille crue en une pastille de combustible ayant une forme cylindrique, à la fois la surface supérieure et la surface inférieure de la pastille de combustible sont préparées pour comprendre :
une cuvette configurée comme une forme de rainure sphérique ayant une surface incurvée prédéterminée à un centre ;
un méplat configuré comme une forme annulaire horizontale le long d'un bord de la cuvette ; et
un chanfrein configuré comme une forme dans laquelle un coin de la surface est chanfreiné à un angle prédéterminé le long d'un bord du méplat, le chanfrein comprenant :
un chanfrein principal adjacent au bord du méplat ; et
un chanfrein secondaire configuré comme une forme dans laquelle le coin de la surface est également chanfreiné le long du bord du chanfrein principal.

7. Procédé de la revendication 6, dans lequel, dans la préparation de la pastille crue par compression et moulage de la poudre mixte, un angle fait par le chanfrein principal et un plan horizontal est configuré pour être inférieur à un angle fait par le chanfrein secondaire et le plan horizontal.

8. Procédé de la revendication 7, dans lequel un angle fait par le chanfrein principal et le plan horizontal est un angle de 1 degré à un angle de 4 degrés.

9. Procédé de la revendication 7, dans lequel un angle fait par le chanfrein secondaire et le plan horizontal est un angle de 14 degrés à un angle de 25 degrés.

10. Procédé de la revendication 6, dans lequel une largeur du méplat est de 0,3 à 1,5 mm.
